# EUROPEAN PATENT SPECIFICATION

(11) **EP 1 333 011 B1**
(45) Date of publication and mention of the grant of the patent: **05.01.2005**
(21) Application number: 02380021.2
(22) Date of filing: 01.02.2002
(51) Int. Cl.: C03B 29/02, C03B 23/025

(54) **Transparent heat-shaped glass furnace**
Ofen zum Biegen von Transparentglass
Four pour former à chaud des verres transparents

(43) Date of publication of application: 06.08.2003
(73) Proprietor: Hornos Industriales Pujol S.A., 08980 Sant Feliu de Llobregat (Barcelona) (ES)
(72) Inventor: Pujol Martin, Joaquin, 08980 Sant Feliu de Llobregat, Barcelona (ES)
(74) Representative: Esteban Perez-Serrano, Maria Isabel

(56) References cited:
- FR-A- 1 285 443
- US-B1- 6 257 022
- PATENT ABSTRACTS OF JAPAN vol. 004, no. 034 (C-003), 22 March 1980 (1980-03-22) & JP 55 007507 A (HITACHI TOKYO ELECTRONICS CO LTD), 19 January 1980 (1980-01-19)

## Description

### PURPOSE OF THE INVENTION

The invention here proposed consists of a furnace for transparent heat-shaped glass, from among the different types of glass sheet heat-shaping ovens designed to obtain different curved pieces.

A special insulation construction in the bottoming hole of the lower base of the furnace characterises this invention, a central progressive internal stepping and an adequate set of temperatures between the two faces of the glass sheet, so that the curved piece doesn't touch the side of the edge of the bottoming hole, because of which it doesn't have deformations at the beginning of its support wings, at the same time that it allows the absence of stresses in the falling contour of the glass, this latter remaining completely transparent, without marks, or mechanical stresses, for later manufacture.

### BACKGROUND TO THE INVENTION

Furnaces for the transforming glass sheets into heat-shaped parts are widely known and used, a variety of applications and registrations existing for them, in great part due to this applicant.

The glass parts obtained from them are of diverse application, among which now stand out those of application in the building construction industry, for example washbasins made with this material.

It is usual that the construction of these washbasins, of whatever configuration, for example of regular oval opening and a wide flat worktop area, takes place by thermal differences between the lower base of the furnace and its top, where they are higher, both parts of the furnace being separated only by the flat glass sheet, there is supported in the bottoming hole of the base of the furnace, in this case of oval shape.

Gravity acting on the hot sheet, when this reaches the adequate degree of pastiness, assisted by this mentioned heat difference, are what cause the lowering of the glass sheet and the shaping of its central bowl.

However the current perfect finishes have not perfectly resolved the difficulty of finishing of the edges of the curvature of the part, that tends to have irregularities because of stress compensation created along the delimiting line of the internal curvature, produced by the lowering of the doughy mass with respect to this border line, during the progressive fall of the part of the sheet that covers the hollow of the bottoming hole of the base of the furnace.

The other problem, indirect, created by these same stresses, is the absence of transparency in the finished product.

The applicant does not know of the existence of furnaces that are able to resolve this difficulty with the simplicity and efficiency of that which is now proposed.

It is known from the State of the Art, a holding jig and a glass plate forming method as the one disclosed in JP 55007507, where it can be observed a jib for bending a glass plate by heat-softening. In this invention a holding jig is provided in which has an upper opening which is slightly smaller than the plate and being provided one end of opening with a glass receiving recess and another glass receiving recess having a tapered inner wall.

The object of the invention US 6257022 is to slump a single sheet of art glass over a convex mold in response to softening of the sheet of art glass by heating in order to shape the sheet of art glass into a configuration for use as a lamp shape. Here the aim of this invention is different to the one disclosed in our invention, in the invention disclosed in the patent US 6257022 the glass is heated in all its mass and it is not created an atmosphere with different temperatures. The final product obtained is not a transparent glass as it happens in our invention.

### DESCRIPTION OF THE INVENTION

The invention that is the subject of this report refers to a transparent heat-shaped glass furnace, among all those different types of furnaces designed for the heat-shaping of glass sheets to obtain various curved parts, such as washbasins with worktops, in a single piece.

A special insulation structure, with internal stepping in a central progressive sense, in the surroundings of the bottoming hole of the lower base or pot of the furnace, characterises this invention.

This shaping of the insulation layer is combined with an adequate heat differential of the furnace, that is reflected in the different temperatures of the two faces of the glass sheet, so that this combination of factors permits that the curved part or depression doesn't ever have contact with the side of the insulation lining of the edge of the bottoming hole of the pot, because of which it doesn't have deformations at the beginning of its support wings, leaving a much more perfect finish because of the elimination of the swellings of the edges typical of conventional depressions.

This new system likewise permits the absence of stresses in the falling contour of the glass, with which, apart from the absence of marks, gives a completely transparent appearance.

### DESCRIPTION OF THE DRAWINGS

This descriptive report is complemented with a set of drawings, illustrative, but never limiting, of the preferred example of the invention.

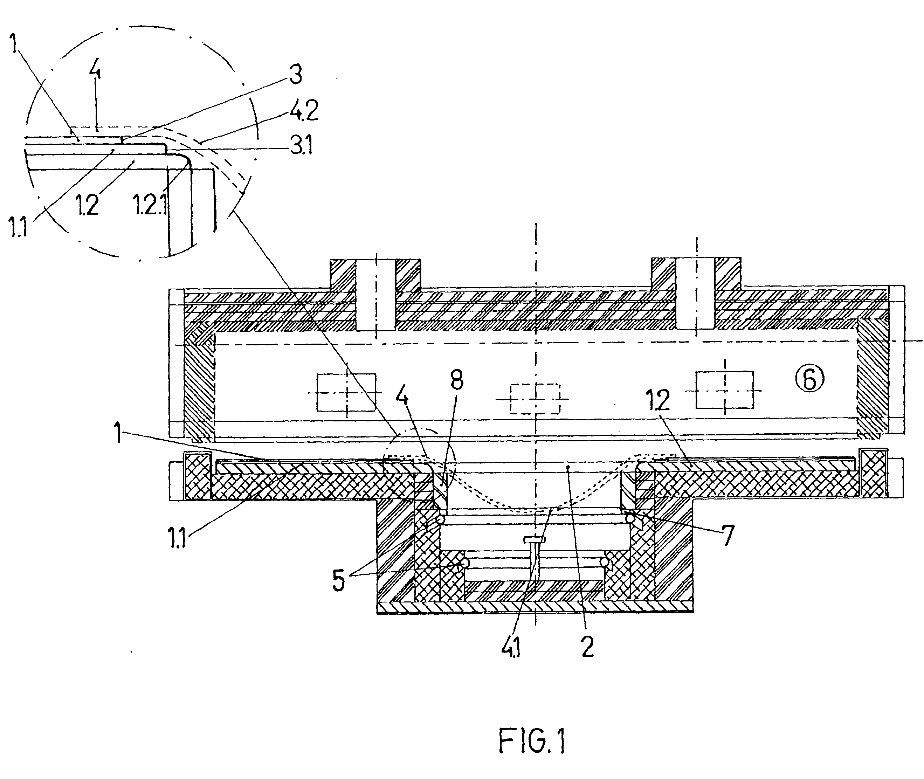

Fig 1 shows an outline section of the furnace, open, and with the glass placed on the upper insulating layer, of ceramic paper, it also shows, dashed, the theoretical position of the depression at its point of maximum lowering. Likewise, it includes a detail of the area of the bottoming hole of the furnace.

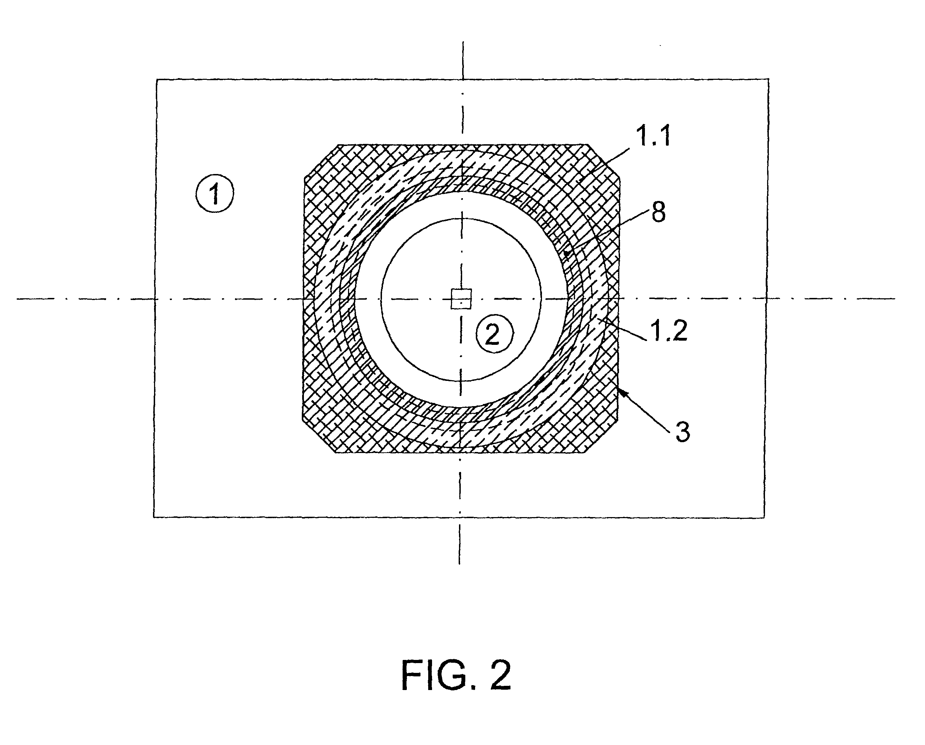

Fig 2 shows a plan of the interior area of the furnace, with its pot and corresponding insulations.

### PREFERABLE REALIZATION OF THE INVENTION

In view of what has been previously set out, this invention reserves to a furnace for transparent heat-shaped glass, from among glass sheet heat-shaping furnaces for obtaining various depressions, for their later manipulation in finished items such as washbasins with worktop, characterised because the rectangular isolating sheet (1), that is made from 3 mm ceramic paper and on which the flat glass is placed, has its inner edge stepped (3) with respect to another insulating sheet (1.1) placed lower, that is also made of ceramic paper of 6 mm thickness, which, and with respect to the previous is squared octagonal, the inner edge of this latter sheet (1.1) being also stepped (3.1) with respect to a ceramic plate (1.2) and placed equidistant at 50 mm from the start of the fully curved edge (1.2.1) of this plate (1.2), which delimits the bottoming hole of the pot (2), whose vertical walls upper part is totally covered with a horizontal lining of a large number of ceramic insulation pieces (8) of 25.4 mm thickness.

Meanwhile between the two faces of the glass sheet (4) a heat difference of about 270°C. is produced, between on one side, those of the centre of the pot (2) of this electric resistance furnace (5), between 800°C. and 830°C., and on the other side, those of the its upper part (6), between 530°C and 560°C, that produces the lowering of the depression to the current cut-off point using a laser beam (7), entrusted with dramatically reducing the temperature of the pot (2).

The rim (4.2) or falling contour of the glass doesn't at any time touch, more than the side edge of the insulating sheet (1), thus eliminating the usual deformations of the edges of the rim (4.2) of the conventional depressions (4.1) and, also eliminating their usual stresses, with which the depressions (4.1) show a totally transparent finish.

Variations in materials, shape, size and layout of the component parts described in a non-limiting way, do not alter the essentiality of this invention, this being sufficient to allow its reproduction by an expert.

## Claims

1. A transparent heat-shaped glass furnace, among glass sheet heat-shaping furnaces for obtaining different depressions, such as washbasins with worktops, which eliminates internal stresses, marks and deformations of the rim edges (4.2) of the depressions (4.1) in its lowering, giving a totally transparent finish to the piece obtained for later manipulation **characterized in that** it comprises:
a rectangular insulating layer (1) of ceramic paper, and on which the flat glass is placed, has its internal edging stepped (3);
under the insulating layer (1) another insulating layer (1.1) is positioned below, being also made of ceramic paper and thicker to the upper one and squared octagonal, the inner edge of this insulating layer (1.1) is also stepped (3.1) with respect to a ceramic plate (1.2);
under the insulating layer (1.1) is positioned a ceramic plate (1.2) which is placed equidistant from the start of the fully curved edge (1.2.1) of this plate which delimits the bottoming hole of the pot (2);
the pot (2) has its vertical wall upper part totally covered with a horizontal lining of a large number of ceramic isolation pieces (8) of greater thickness than the layers.

2. A transparent heat-shaped glass furnace according to claim 1, **characterized in that** inside the pot there are electric resistances (5) for producing the lowering of the depression (4.1), and the pot (2) is also provided with a laser beam (7) for reducing dramatically the temperature of the pot (2) when cut by the depression (4.1) in use.

3. Transparent heat shaped glass furnace, according to claim 1, **characterized in that** the furnace is so configured such that in use the rim (4.2) or falling contour of the glass never touches against more than the side edge of the insulation sheet.

4. Transparent heat shaped glass furnace, according to any previous claim, **characterized in that** the furnace is so designed such that in use in the interior of the furnace the difference of the temperature between the two faces of the glass sheet (4) is about 270°C, there being a temperature in its upper part (6) between 530°C to 560°C, while the temperature in its lower part (7) is between 800°C to 830°C.

## Patentansprüche

1. Ein durchsichtiger hitzeformender Glasbrennofen unter den hitzeformenden Glassbrennöfen zum Erhalt von verschiedenen Vertiefungen, wie Waschbecken mit Arbeitsplatten, der die inneren Beanspruchungen, Riefen und Verformungen der Ränder (4.2) der Vertiefungen (4.1) in ihren Senkungen entfernt, wodurch das Teil eine vollkommen durchsichtige Oberfläche für die weitere Verarbeitung erhält, **dadurch gekennzeichnet, dass** er folgendes umfasst:
- eine rechteckige Isolierschicht (1) aus Keramikpapier und auf der die Glasscheibe gelegt wird hat abgestufte innere Kanten (3);
- unter der Isolierschicht (1) wird eine weitere Isolierschicht (1.1) angebracht, die auch aus Keramikpapier besteht und dicker als die obere sowie achteckig ist, wobei die innere Kante der Isolierschicht (1.1) auch abgestuft (3.1) ist hinsichtlich einer Keramikplatte (1.2);
- unter der Isolierschicht (1.1) ist eine Keramikplatte (1.2) angebracht, die in gleichem Abstand vom Anfang der völlig gebogenen Kante (1.2.1) dieser Platte angebracht ist, die das Bodenloch des Tiegels (2) begrenzt;
- der Tiegel (2) verfügt über eine senkrechte Wand, deren oberer Teil vollständig mit einer waagerechten Verkleidung einer grossen Anzahl an Keramikisolierteilen (8) versehen ist, die dicker sind als die Schichten.

2. Ein durchsichtiger hitzeformender Glasbrennofen gemäss Anspruch 1, **dadurch gekennzeichnet, dass** innerhalb des Tiegels elektrische Widerstände (5) vorgesehen sind, um die Senkung der Vertiefung (4.1) zu erzielen und der Tiegel (2) ausserdem über einen Laserstrahl (7) verfügt, der die Temperatur des Tiegels (2) stark reduziert, wenn er von der verwendeteten Vertiefung (4.1) unterbrochen wird.

3. Ein durchsichtiger hitzeformender Glasbrennofen, gemäss Ansprch 1, **dadurch gekennzeichnet, dass** der Ofen so ausgelegt ist, dass bei Gebrauch die Kante (4.2) oder abfallende Umrandung des Glases niemals gegen die Seitenkanten der Isolierschicht stösst.

4. Ein durchsichtiger hitzeformender Glasbrennofen, gemäss einem beliebigen der vorangegangenen Ansprüche, **dadurch gekennzeichnet, dass** der Ofen so ausgelegt ist, dass bei Gebrauch im Inneren des Ofens der Temperaturunterschied zwischen den beiden Oberflächen der Glasscheibe (4) etwa 270° beträgt, wobei die Temperatur im oberen Bereich (6) zwischen 530°C und 560°C beträgt, während die Temperatur im unteren Bereich (7) zwischen 800°C und 830°C beträgt.

## Revendications

1. Four à verre thermoformé transparent, parmi les fours de thermoformage de feuilles de verre pour obtenir différentes dépressions, tels que des lavabos avec table qui élimine les contraintes internes, les marques et les déformations des rebords (4,2) des dépressions (4,1) dans leur descente, en fournissant une finition complètement transparente à la pièce obtenue pour une manipulation postérieure, **caractérisé en ce qu'**il comprend :
une couche isolante rectangulaire (1) de papier céramique, et sur laquelle est mis en place le verre plan, a son bord interne échelonné (3);
sous la couche isolante (1) une autre couche isolante (1,1) est positionnée en dessous, celle-ci étant aussi fabriquée en papier céramique et étant pourvu d'une une épaisseur supérieure à la supérieure et ayant une forme octogonale carrée, le bord intérieure de la couche isolante (1,1) est aussi échelonné (3,1) par rapport à la plaque céramique (1,2,) ;
sous la couche isolante (1,1) est positionné une plaque céramique (1,2) qui est mise en place à équidistance du début du bord complètement courbé (1,2,1) de cette plaque qui délimite l'orifice de blocage du pot (2);
le pot (2) a sa partie supérieure de paroi verticale complètement couverte d'un revêtement horizontal d'un grand nombre de pièces isolantes en céramique (8) avec une épaisseur supérieure à celle des couches.

2. Un four à verre thermoformé transparent, selon la revendication 1, **caractérisé en ce qu'**à l'intérieur du pot il y a des résistances électriques (5) pour produire la descente de la dépression (4,1) et le pot (2) est aussi pourvu d'un faisceau laser (7) pour réduire dramatiquement la température du pot (2), lorsqu'il est coupé par la dépression (4,1) en cours d'utilisation.

3. Un four à verre thermoformé transparent, selon la revendication 1, **caractérisé en ce que** le four est configuré de manière qu'en cours d'utilisation le rebord (4,2) ou contour descendant du verre ne contacte que le bord latéral de la couche isolante.

4. Un four à verre thermoformé transparent, selon l'une quelconque des revendications antérieures, **caractérisé en ce que** le four est ainsi conçu pour qu'en cours d'utilisation à l'intérieur du four la différence de température entre les deux faces du verre plan (4) soit d'environ 270°C, la température étant sur sa partie supérieure (6) entre 540°C et 560°C, tandis que la température sur sa partie inférieure (7) est entre 800°C et 830°C..
